# EUROPEAN PATENT APPLICATION

(11) **EP 3 267 407 A1**
(43) Date of publication of application: **10.01.2018**
(21) Application number: 16305848.0
(22) Date of filing: 05.07.2016
(51) Int. Cl.: G07G 1/00, G06Q 20/20, B62B 3/18

(54) **SHOPPING CONTAINER, SHOPPING INFRASTRUCTURE AND RELATED METHOD**

(71) Applicant: Berard, Dominique, 91300 Massy (FR)
(72) Inventor: Berard, Dominique, 91300 Massy (FR)
(74) Representative: Lavoix

(57) **Abstract**

The shopping container (12), comprises:
- at least a wall (40, 42) defining a product storage volume (44);
- at least one product identification sensor (50) able to generate data representative of a product.

The at least one product identification sensor (50) is fixedly mounted on the at least one wall (40, 42) to generate data representative of the product without movement of the at least one product identification sensor (50) when a product is inserted in the product storage volume (44) or is removed out of the product storage volume (44), the shopping container (12) comprising a communication unit (52) connected to the at least one product identification sensor (50), the communication unit (52) being able to transmit the data representative of the product to a product identification server (16).

## Description

The present invention concerns a shopping container, comprising:
- at least a wall defining a product storage volume ;
- at least one product identification sensor able to generate data representative of a product.

The shopping container is for example a shopping cart, a shopping trolley or a shopping basket. It is for use in a shopping area, such as a shopping center, or a supermarket. It is particularly adapted for use in a grocery store selling a variety of products, such as food, drinks, clothing, etc.

In a grocery store, the shopping process can be tedious for the user. The user must pick up a cart, place selected products in the cart, stand in line at the cashier and then take out the products from the cart after having stood in line. Once the price of the various products have been scanned by the cashier, the consumer must put back all the products in the cart again, and pay the bill. Then, the user must unload all the products into his car and/or at home.

The shopping process is not user friendly. The selected products are moved at least four times from beginning to start. Additionally, the user loses a lot of time queuing at the cashier.

In terms of cost, the price of each product is hard to determine and is often put on signs which are not easily accessible to the user. The amount of the bill is not known until the final count at the casher. Moreover, the customer does not have any idea of comparative prices between different grocery stores for the same product.

In order to partially overcome these problems, it is known to provide the user with a hand portable scanner with the drawback for the user of having to register before being able to have access to this service. The user scans the different items before placing them in his cart. At the casher, the user just hands out its scanner and pays the bill.

Such a process is not fully satisfactory. Indeed, the act of scanning every product is tedious for the user. Moreover, if the user is not honest, there is a risk that the user does not scan every item which is introduced in his cart. Some items may not be paid, leading to additional costs for the grocery store.

US 2006/032915 discloses a shopping infrastructure in which the products which are placed in a shopping container are tracked with a system of cameras located at different places in the store. Such a system theoretically offsets the need for the user to scan every product present in his shopping container.

Nevertheless, the system is expensive to put in place. Its reliability for the detection of various products is questionable.

US2004/0073489 discloses a shopping cart enabling self-checkout and WO98/42239 a computerized shopping cart which complexity makes it impossible for a shopper to use on top of which the direct cost for the equipment and infrastructure, as well as indirect costs for maintaining the system working make it impossible to actually offer for any shop.

One aim of the invention is to obtain a shopping container which reliably detects the products present at all time in the shopping container, while minimizing the actions needed for the user during a shopping process.

Another aim of the invention is reuse the existing infrastructure in the shop with a minimum add-on to provide the benefits of the invention at low cost, i.e. by the possibility to retrofit the existing carts and using the existing shop information system.

To this aim, the subject-matter of the invention is a shopping container of the above-mentioned type, characterized in that:the at least one product identification sensor is fixedly mounted on the at least one wall to generate data representative of the product without movement of the at least one product identification sensor when a product is inserted in the product storage volume or is removed out of the product storage volume, the shopping container comprising a communication unit connected to the at least one product identification sensor, the communication unit being able to transmit the data representative of the product to a product identification server.

The shopping container according to the invention may comprise one or more of the following features, taken solely or according to any potential technical combination:
- the at least one product identification sensor comprise a scanner able to detect a shape of a product and/or an identification tag on the product and/or is an ultrasonic device;
- the scanner comprises a radar, in particular a LIDAR;
- the at least one product identification sensor comprises at least two scanners having distinct scanning directions;
- the at least one wall comprises a bottom wall, the at least one product identification sensor being a weighing scale placed on the bottom wall;
- the communication unit comprises a computing unit able to receive product identification data from a database of the product identification server, the product identification data being obtained by comparing product characterization data contained in the database with the data generated by the at least one product identification sensor to identify the product inserted in the product storage volume or removed from the product storage volume;
- a user mobile terminal docking station, connected to the communication unit, the docking station being able to removably receive a user mobile terminal ;
- a localization sensor able to determine a geographical position of the product storage volume in a shopping area ;
- at least a rechargeable battery able to power the at least one product identification sensor and/or the communication unit;
- the product storage volume is delimited in a shopping cart, a shopping trolley and/or a shopping basket.

The present invention also concerns a shopping infrastructure comprising:
- a plurality of shopping containers as defined above,
- an product identification server, comprising at least a product database, connected to the communication unit of each shopping container for identifying each product inserted in the product storage volume or removed from the product storage volume based on the data generated by the at least one product identification sensor;
- for each shopping container, a user mobile terminal, the user mobile terminal being connected to the communication unit and/or to the product identification server to receive information about each product being introduced in the product storage volume and/or removed from the product storage volume.

The shopping infrastructure according to the invention may comprise one or more of the following features, taken solely or according to any possible technical combination:
- the user mobile terminal is configured to operate a product listing application able to list at any time the products contained in the product storage volume and to calculate a total price of the products contained in the product storage volume based on the data generated by the at least one product identification sensor;
- the product identification server is a local server in a shopping area containing at least a database of the products available in the shopping area, the shopping infrastructure comprising a product analysis server able to receive data from several user mobile terminals connected to several shopping containers to generate a database containing features of at least a product available in several shopping areas from the data, the features advantageously comprising prices of the product in several shopping areas.

The invention also concerns a shopping method comprising:
- providing a shopping infrastructure as defined above;
- placing a product in the product storage volume of a shopping container;
- generating data representative of the product with the at least one product identification sensor without moving the sensor when the product is inserted in the product storage volume;
- communicating with the product identification server through the communication unit to identify the product placed in the product storage volume based on the data representative of the product generated with the at least one product identification sensor.

The method according to the invention may comprise the following features:
- docking a user mobile terminal on the shopping container;
- receiving in the user mobile terminal, product identification data relative to the product placed in the product storage volume, the data being received from the product identification server.

The invention will be better understood upon reading of the following description, given solely as an example and made in reference to the following drawings in which:
- figure 1 is a schematic view of a shopping infrastructure according to the invention; and
- figure 2 is a perspective view of an example of shopping container according to the invention.

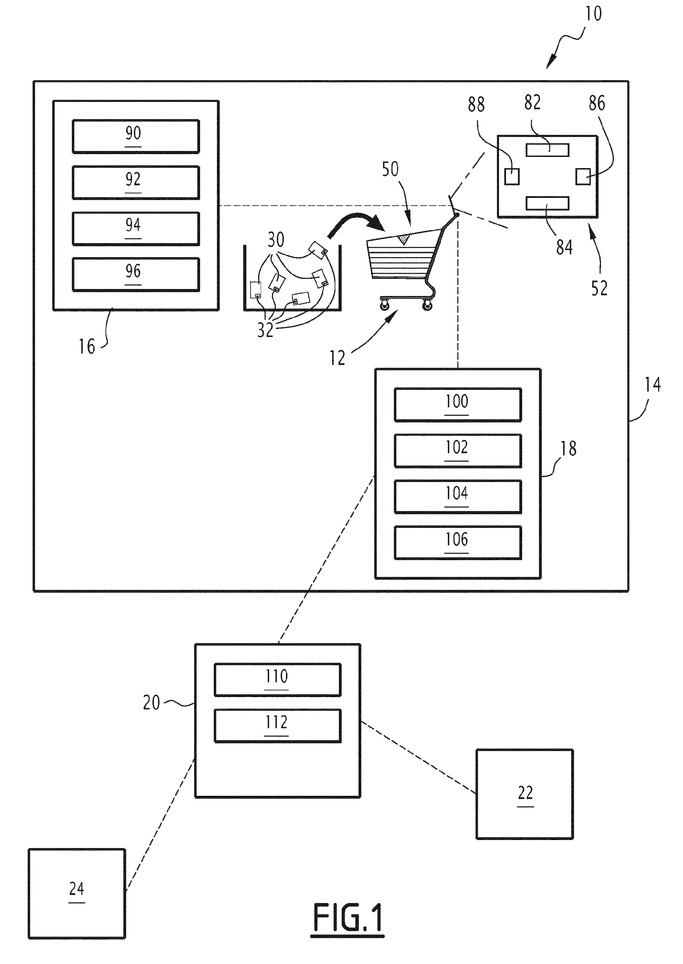

A first shopping infrastructure 10 according to the invention is illustrated schematically in figure 1. The shopping infrastructure 10 comprises a plurality of shopping containers 12 available in a shopping area 14, a product identification server 16 of the shopping area 14, and for each shopping container 12, a user mobile terminal 18 intended to be connected to the shopping container 12.

The shopping infrastructure 10 also comprises an external product analysis server 20, connected at some point in time to each user mobile terminal 18, and to home remote terminals 22 and eventually to product manufacturer remote terminals 24.

The shopping area 14 is for example a department store, a supermarket, and/or a open market. It comprises a plurality of products 30 which are on sale each at a predefined price in the shopping area 14.

The products 30 are for example groceries, clothing, hardware, any packaged goods as well as unpackaged goods. The products 30 can be picked up by a user when circulating in the shopping area 14.

Each product 30 has at least a specific feature, such as a shape, a color, a packaging, which is characteristic of the product.

Each product 30 advantageously comprises at least an identification tag 32 which is visible externally on the packaging of the product. The identification tag 32 is for example a 1 D, 2D or 3D tag which can be read by a scanner. The identification tag 32 is preferentially an inactive tag, visible on an outside surface of the product. As opposed to a RFID tag which is an active expensive tag, the identification tag 32 is easy and cheap to provide on a packaging of the product 30, for example by printing.

Examples of 1D tags are bar codes. Examples of 2D tags are QR codes..

The products 30 are available for example on shelves, tables, display stands and/or racks in the shopping area 14.

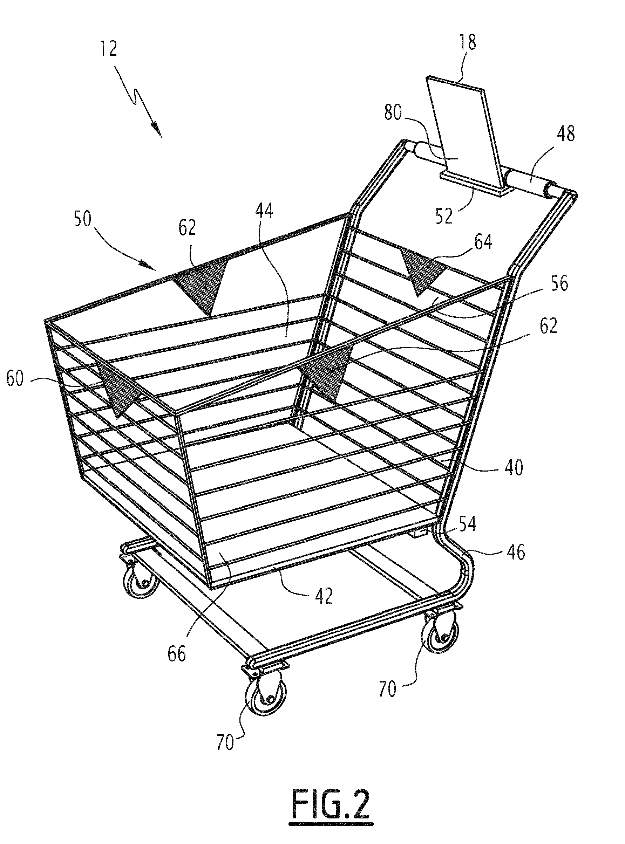

In reference to figure 2, the shopping container 12 comprises at least a frame or wall 40, 42 defining a central product storage volume 44. In the example of figure 2, the shopping container 12 further comprises a moving frame 46, and a handling equipment 48 for easily moving the shopping container 12 in the shopping area 14.

According to the invention, the shopping container 12 further comprises a plurality of product identification sensors 50, affixed to the walls 40, 42, the sensors being able to generate identification data of each product 30 introduced and/or removed from the product storage volume 44.

The shopping container 12 further comprises a communication unit 52 able to gather and communicate the identification data to the product identification server 16 and to the user mobile terminal 18.

Advantageously, the shopping container 12 comprises at least a battery 54 to provide electrical power to the sensors 50 and to the communication unit 52.

In the example of figure 2, the shopping container 12 comprises a peripheral vertical wall 40 and a bottom wall 42. The peripheral wall 40 and the bottom wall 42 are for example each made of a frame defining through apertures or made of trellis of bars.

The product storage volume 44 opens vertically at the upper edge of the peripheral wall 40 through an upper product introduction and/or removal opening 56.

Any product 30 picked up by the user is introduced in the product storage volume 44 through the upper opening 56 and/or is removed thereof through the upper opening 56.

The product storage volume 44 is substantially open. By "substantially open", it is meant that more than 80%, preferentially more than 90% of the area delimited by the upper edge of the peripheral wall 40 is vertically free of any obstacle from the upper edge altitude to the bottom wall 42. A product 30 introduced in the substantially open area of the upper opening 56 is able to freely fall to the bottom wall 42 and lay on the bottom wall 42. No shutter or panel is present in the product storage volume 44.

The plurality of product identification sensors 50 are permanently affixed on the walls 40, 42. By "permanently affixed", it is meant that the user of the shopping container 12 cannot remove any of the sensors 50 without dismounting the sensor 50 using tools and/or other equipment. The sensors 50 are for example mechanically fixed on at least one of the lateral wall and of the bottom wall 42 in the product storage volume 44.

As opposed to a mobile scanner, each product identification sensor 50 is able to generate data representative of a product 30 without having to be moved in front of the product.

Namely, the user does not have to handle or seize any of the product identification sensors 50 to generate data representative of the product 30.

The data is generated when the product 30 is moved by the user, by passing in the detection range of the sensor 50, for example when the product is introduced in the product storage volume 44 through the upper opening 56 or when it is removed from the product storage volume 44 through the upper opening 56.

In the example of figure 2, the shopping container 12 comprises several identification sensors 50 located on different faces of the peripheral wall 40, inside the product storage volume 44.

At least one sensor 60 is located on a front face of the peripheral wall 40, at least one sensor 64 is located on a back face of the peripheral wall 40, and at least two sensors 62 are located on lateral faces of the peripheral wall 40.

Preferentially, the sensors 60 to 64 are located towards the upper edge of peripheral wall 40. Additionally, at least one sensor 66 is located on the bottom wall 42.

Thus, the sensors 50 can detect a product 30 which is introduced and/or removed from the product storage volume 44, without having to move the sensor 50, from different directions of observation of the product 30.

At least one sensor 60 to 64 comprises a scanner able to detect a shape of a product and/or an identification tag on the product. Preferably, the scanner is a radar able to detect movement and volume of the product such as a LIDAR. The scanner is also advantageously an ultrasonic device.

In the example of figure 2, the shopping container 10 contains at least two sensors 60, 62 for movement and volume detection having two distinct scanning directions, such as sensors 60, 62, which are affixed respectively on the front and lateral faces of the peripheral wall 40.

The shopping container 12 further comprises at least one imaging sensor 64 which allows 1 D/2D/3D identification tag reading.

This sensor 64 may be attached at the back face of the peripheral wall 40.

At least one product identification sensor 66 located at the bottom wall 42 is a scale. The scale is able to provide data representative of the weight of the product introduced in the product storage volume 44 or removed from the product storage volume 44.

The sensors 60 to 66 are all connected to the communication unit 52 to send data representative of the product 30, generated by the sensors 60 to 66, to the communication unit 52.

The sensors 60 to 66 are also connected to the battery 54 to be electrically powered by the battery 54.

In the example of figure 2, the moving frame 46 comprises wheels 70 to allow the shopping container 12 to roll on the floor of the shopping area 14. The wheels 70 are for example coupled to a power generator to generate electrical power transmitted to the battery 54 when the shopping container 12 is moving in the shopping area 14.

The batteries 54 are rechargeable. They can be recharged through direct connection when the shopping container 12 is docked in an appropriate docking station and/or through a wireless power generator and/or through the motion of the wheels 70.

The communication unit 52 advantageously comprises a dock 80 for removably receiving the user mobile terminal 18. It comprises a computing unit for example comprising a processor 80 and a memory 82 containing applications for gathering data received from each of the individual product identification sensors 50 and a communication interface 84, for sending the data gathered by the data gathering application to the product identification server 16 and to the user mobile terminal 18.

The communication application 84 is able to operate with any wireless communication protocol such as WiFi (e.g, using Standard IEEE 802.11), Zigbee (based on IEEE 802.15.4), Bluetooth (e.g based on Standard IEEE 802.15.1), Li-Fi (using similar 802.11 protocols)..

Advantageously, the communication unit 52 comprises a localization sensor 86 connected to the communication application 84 to send at each instant data relative to the localization of the shopping container 12 in the shoping area 14 and a status application 88 able to indicate to the user the container status, the battery loading, etc.

The product identification server 16 belongs to a particular shopping area 14. It comprises at least computer containing a memory, and a processor able to run applications contained in the memory.

The product identification server 16 contains or is able to connect to a product identification database 90. It advantageously contains or is able to connect to a store advertisement and promotion database 92 which is specific to this shopping area 14.

The memory of the product identification server 16 contains a product identification application 94 and a communication application 96.

The communication application 96 is able to receive data from the communication unit 52 of each shopping container 12 located in the shopping area 14 when a product 30 is introduced and/or removed from the product storage volume 44. It is able to send data to the product identification application 94. The product identification application 94 is able to identify the product 30 by querying the product identification database 90 and potentially the store advertisement database 92 to obtain a product identification and a product price. The product identification and the product prices are sent back to the user mobile terminal 18.

The product identification database 90 relates identification data generated by each of the sensors 60 to 66, namely by optical sensors, scanners, and/or weight sensors, preferably by a combination of these sensors, to a product identification and to a price for this product.

The store advertisement and promotion database 92 is able to correct the price contained in the product identification database 90 associated with the product 30, depending on context associated with the shopping container 12, such as time, localization, user data...

The user mobile terminal 18 is for example a mobile phone, a portable tablet, or any other mobile terminal containing at least a processor and a memory.

The memory contains applications able to be executed by the processor. Among such applications, the mobile terminal 18 comprises a product listing application 100 able to determine the list of products present in the product storage volume 44 at any time, a cashless payment application 102, able to send payment information based on the list of products present in the product storage volume 44 when the shopping container 12 leaves the shopping area 14 or goes through a cashier and a product analysis application 104, able to communicate with the product analysis server 20 to transmit product data to the product analysis server 20.

The memory advantageously contains a product comparator application 106 able to receive comparison data from the product analysis server 20.

The product listing application 100 is able to receive information from the product identification server 16 upon every occurrence of a product insertion in the product storage volume 44 and/or of a product removal from the product storage volume 44.

It is able in particular to receive the identification of the product and on the price of the product 30. It is able to list and display, at any time, the list of products 30 contained in the product storage volume 44 and the price of each product 30, and the total price of the products 30 contained in the product storage volume 44.

The cashless payment application 102 is able to, upon validation of the user and/or of the shopping area 14 to send payment information to a user bank account to make a payment of the content of the product storage volume 44.

The product analysis communication application 104 is able to transmit to the product analysis server 20 data concerning the products 30 contained in the product storage volume 44 of the user and the prices associated to each product.

The product comparator application 106 is able to query the product analysis server 20 to determine price of items contained in the product storage volume 44 in shopping areas other than the shopping area 14 in which the user is currently shopping.

The product analysis server 20 comprises at least a computer having a memory and a processor containing applications able to be executed by the processor. It comprises at least a user data collection application 110, a product price comparison application 112.

The user data collection application 110 is able to save data relative to the list of products contained in the product storage volume 44 of a shopping container 12 of a user, for example after the user has activated the cashless payment application 102. It is able to build a user habit database gathering for example all the products purchased by a specific user at different shopping areas, the price of the product obtained at each shopping area...

The product price comparison application 112 is able to build a database of different prices for each product collected in a product storage volume 44 of a user, to obtain a comparative information on prices offered for the same product at different shopping areas. It is able to be queried by the user mobile terminal 18 during the shopping in the shopping area 14.

A shopping method according to the invention will be now described.

Initially, the user picks up a shopping container 12. The user docks its mobile terminal 18 on the communication unit 52. It activates the product listing application 100 and starts moving into the shopping area 14.

When the user is interested with a particular product 30, it grabs the product 30 and introduces it into the product storage volume 44 through the upper opening 56. The product identification sensors 50 detect the passage of the product 30 into the product storage volume 44, without the user having to move any sensor 50.

More precisely, the sensors 60, 62 for movement and/or volume detection detect data relative to a shape and/or volume of the product 30, i.e. possibly a tomographic image of the product.

The cart scanner 64 is able to detect the identification tag 32 available on the packaging of the product 30 and obtains data relative to this identification tag 32. In correlation, when the product 30 is placed on the bottom wall 42, the weighing sensor 66 detects data representative of the weight of the product.

The data is gathered without intervention of the user. The user shops with his/her usual routine of inserting the product in the product storage volume 44.

The shopping method is therefore very simple and very natural to the user, contrary to a method carried out with a scanning device which must be handled by the user when the product is introduced in the product storage volume 44.

Moreover, the risk of fraud is considerably decreased, since each product introduced in the product storage volume 44 is detected by at least one of the sensors 50.

The gathering application 82 gathers all the data arising from the different sensors 60 to 66 and the communication application 84 sends the data to the product identification server 16.

The communication application 96 of the product identification server 16 collects the data received from the communication unit 52, and sends it to the product identification application 94. The product identification application 94 queries the product identification database 90 and advantageously the stored advertisement database 92 to determine at least a product identification of the product inserted in the product storage volume 44 and a price associated with this product, eventually corrected by a promotion.

Then, the product identification and product price generated by the identification database 90 is sent to the user mobile terminal 18. It is received in the product listing application 100 which lists an additional product into the list of products contained into the product storage volume 44, as well as the price of the product.

The product listing application 100 further calculates a total price of the products contained into the product storage volume 44.

The same steps are reproduced for each product 30 introduced into the product storage volume 44.

Whenever the user removes a product from the product storage volume 44, the product identification sensors 50 produce data 30 relative to the volume and/or shape of the product 30 as well as of an identification tag 32 of the product 30, and detect that the total weight sensed by the sensor 66 decreases.

Just as before, the data is transmitted to the product identification server 16 to generate a product identification and price.

The product identification as well as the price of the removed product is sent to the product listing application 100 to remove the product from the product list contained into the product storage volume 44 and to subtract the price of the removed product from the total price.

When the user is done with his shopping in the shopping area 14, it activates the cashless payment application 102.

The cashless payment application 102 calculates the total price of all the products contained in the product storage volume 44 and sends payment execution information to the user bank for effective payment of the store.

Then, the product analysis communication application 104 sends the data relative to the products 30 contained in the product storage volume 44 to the product analysis server 20.

The user data collection application 110 of the product analysis server 20 adds the data from the purchase in the user purchasing database, the comparator application 112 also gathers the price data and product data to update the product comparator database with information relative on each product available in the product storage volume 44 associated with its price at the shopping area 14.

During the course of the shopping, should the user wishes to compare the price of a particular product introduced into the product storage volume 44, it activates the product comparator application 106 which gathers data from the product comparator database of the product analysis server 20 to display comparative prices for the product in other shopping areas.

After shopping in a particular shopping area 14, the user is able query the product analysis server 20 from another location, for example from a home remote terminal 22 to determine his/her habits, his/her consumer list, or to make other online purchases based on a list of products gathered from a previous shopping in the shopping area 14.

Similarly, product manufacturers are able to access information from the product comparator database to determine average prices, quickly and efficiently, without having to carry out comparative shopping in different shopping areas.

Thanks to the shopping container 12 according to the invention, the shopping routine of a user is facilitated. Products are only moved twice by the user, once for introducing the product into the product storage volume 44 and once for transferring the product from the product storage volume 44 to the user car or bags.

The amount of the bill paid by the user is known in real time, based on the exact content of products in the product storage volume 44. The price can be calculated without effort for the user, since the product identification sensors 50 works autonomously, without the user having to interact with them.

There is no queuing or waiting at a cashier, since the payment operation can be validated easily and quickly. Data and analysis of products purchased are available to the user during the shopping routine or at later time. This greatly reduces the time necessary for shopping and the hassle associated with the shopping.

For the shopping area 14, the use of the shopping infrastructure 10 according to the invention greatly reduces the need for personnel, or allows personnel to be more available for helping the user and advise sells. It reduces the risk of frauds.

The stock on the shells of the shopping area 14 can be reduced and adapted in real time. The refilling of the shells can be done at any time.

The shopping container 12 according to the invention has a very simple and cheap structure, which can easily be installed on an existing infrastructure in a shopping area 14.

In variation, the data collected from the user purchase can be available to be shared with a connected object such as a connected storage areas such as a fridge. As a consequence, the content of the storing area can be updated based on the product list when the purchase is validated.

In a professional environment, the storing area can be provided with sensors (not shown) to determine which products are actually stored and/or in which region of the storing area.

The shopping container 12 according to the invention is also adapted for goods which are sold in bulk. The sensors 50 are able to identify a tag 32 located on a temporary packaging, such as a bag or pocket in which the bulk products sampled by the user are placed. The tag identifies the products contained in the temporary packaging and the weighing sensor 66 determines the weight of the products contained in the temporary packaging. This solution is particularly adapted to open markets.

## Claims

1. A shopping container (12), comprising :
- at least a wall (40, 42) defining a product storage volume (44);
- at least one product identification sensor (50) able to generate data representative of a product;
**characterized in that** the at least one product identification sensor (50) is fixedly mounted on the at least one wall (40, 42) to generate data representative of the product without movement of the at least one product identification sensor (50) when a product is inserted in the product storage volume (44) or is removed out of the product storage volume (44), the shopping container (12) comprising a communication unit (52) connected to the at least one product identification sensor (50), the communication unit (52) being able to transmit the data representative of the product to a product identification server (16).

2. The shopping container (12) of claim 1, wherein the at least one product identification sensor (50) comprise a scanner able to detect a shape of a product and/or an identification tag on the product and/or is an ultrasonic device.

3. The shopping container (12) according to claim 2, wherein the scanner comprises a radar, in particular a LIDAR.

4. The shopping container (12) according to claim 2 or 3, wherein the at least one product identification sensor (50) comprises at least two scanners having distinct scanning directions.

5. The shopping container (12) according to any one of the preceding claims, wherein the at least one wall (40, 42) comprises a bottom wall (42), the at least one product identification sensor (50) being a weighing scale placed on the bottom wall (42).

6. The shopping container (12) according to any one of the preceding claims, wherein the communication unit (52) comprises a computing unit able to receive product identification data from a database of the product identification server (16), the product identification data being obtained by comparing product characterization data contained in the database with the data generated by the at least one product identification sensor (50) to identify the product inserted in the product storage volume (44) or removed from the product storage volume (44).

7. The shopping container (12) according to any one of the preceding claims, comprising a user mobile terminal (18) docking station, connected to the communication unit (52), the docking station being able to removably receive a user mobile terminal (18).

8. The shopping container (12) according to any one of the preceding claims, comprising a localization sensor (50) able to determine a geographical position of the product storage volume (44) in a shopping area (14).

9. The shopping container (12) according to any one of the preceding claims, comprising at least a rechargeable battery (54) able to power the at least one product identification sensor (50) and/or the communication unit (52).

10. The shopping container (12) according to any one of the preceding claims, wherein the product storage volume (44) is delimited in a shopping cart, a shopping trolley and/or a shopping basket.

11. A shopping infrastructure (10) comprising:
- a plurality of shopping containers (12) according to any one of the preceding claims,
- an product identification server (16), comprising at least a product database, connected to the communication unit (52) of each shopping container (12) for identifying each product inserted in the product storage volume (44) or removed from the product storage volume (44) based on the data generated by the at least one product identification sensor(50);
- for each shopping container (12), a user mobile terminal (18), the user mobile terminal (18) being connected to the communication unit (52) and/or to the product identification server (16) to receive information about each product being introduced in the product storage volume (44) and/or removed from the product storage volume (44).

12. A shopping infrastructure (10) according to claim 11, wherein the user mobile terminal (18) is configured to operate a product listing application (100) able to list at any time the products contained in the product storage volume (44) and to calculate a total price of the products contained in the product storage volume (44) based on the data generated by the at least one product identification sensor (50).

13. A shopping infrastructure (10) according to claim 11 or 12, wherein the product identification server (16) is a local server in a shopping area (14) containing at least a database of the products available in the shopping area (14), the shopping infrastructure (10) comprising a product analysis server (20) able to receive data from several user mobile terminals (18) connected to several shopping containers (12) to generate a database containing features of at least a product available in several shopping areas (14) from the data, the features advantageously comprising prices of the product in several shopping areas (14).

14. A shopping method, comprising :
- providing a shopping infrastructure (10) according to any one of claims 11 to 13;
- placing a product in the product storage volume (44) of a shopping container (12);
- generating data representative of the product with the at least one product identification sensor (50) without moving the sensor (50) when the product is inserted in the product storage volume (44);
- communicating with the product identification server (16) through the communication unit (52) to identify the product placed in the product storage volume (44) based on the data representative of the product generated with the at least one product identification sensor (50).

15. A method according to claim 14 comprising:
- docking a user mobile terminal (18) on the shopping container (12)
- receiving in the user mobile terminal (18), product identification data relative to the product placed in the product storage volume (44), the data being received from the product identification server (16).
